# EUROPEAN PATENT APPLICATION

(11) **EP 4 400 980 A1**
(43) Date of publication of application: **17.07.2024**
(21) Application number: 22886116.7
(22) Date of filing: 28.10.2022
(51) Int. Cl.: G06F 16/16

(54) **MEDIA FILE MANAGEMENT METHOD AND RELATED APPARATUS**

(30) Priority: 30.10.2021 CN 202111278479
(71) Applicant: Petal Cloud Technology Co., Ltd., Dongguan, Guangdong 523799 (CN)
(72) Inventor: BAO, Rui, Dongguan, Guangdong 523799 (CN); HE, Ping, Dongguan, Guangdong 523799 (CN)
(74) Representative: Thun, Clemens
(86) International application number: PCT/CN2022/128224
(87) International publication number: WO 2023/072241

(57) **Abstract**

A media file management method and a related apparatus are disclosed. The method includes: An electronic device receives a first user operation, where the first user operation is for saving a first media file; the electronic device displays a first window for the first media file based on the first user operation, where the first window is for providing a manner of editing file information of the first media file; the electronic device receives the file information of the first media file; and the electronic device saves the first media file, the file information, and a mapping relationship between the first media file and the file information. In embodiments of this application, a media file is managed in a manner of manually inputting the file information by a user, to avoid a problem that some new media formats cannot be supported by an original analysis program of the electronic device or an analysis process for some large media files is long, so as to improve overall efficiency.

## Description

This application claims priority to Chinese Patent Application No. 202111278479.1, filed with the China National Intellectual Property Administration on October 30, 2021, and entitled "MEDIA FILE MANAGEMENT METHOD AND RELATED APPARATUS", which is incorporated herein by reference in its entirety.

### TECHNICAL FIELD

This application relates to the field of electronic technologies, and in particular, to a media file management method and a related apparatus.

### BACKGROUND

With development of technologies, a large quantity of multimedia files such as pictures and videos may be saved on an intelligent terminal of a user. Some of them are photographed by the user by using the intelligent terminal, and some of them are saved by the user from different apps. With an increasing quantity of saved multimedia files, the user usually cannot quickly find a picture, a video, or the like that the user wants.

Currently, an operating system or picture browsing software of the intelligent terminal may provide the user with a retrieval service of a multimedia file like a picture or a video. For example, a folder is used to categorize pictures or videos, including a folder automatically generated by an application and a folder manually created by the user. However, most of multimedia files displayed in the folder are pictures, videos, and the like that are sorted based on a file creation date sequence or file name sequence. This is meaningless for the user to browse and understand a scenario. When there are a large quantity of multimedia files in the folder, it is still inconvenient for the user to perform operations such as searching, browsing, and deleting, which leads to low media file management efficiency.

### SUMMARY

Embodiments of this application provide a media file management method and a related apparatus, to improve media file management efficiency.

According to a first aspect, this application provides a media file management method. The method includes: An electronic device receives a first user operation, where the first user operation is for saving a first media file; the electronic device displays a first window for the first media file based on the first user operation, where the first window is for providing a manner of editing file information of the first media file; the electronic device obtains the file information of the first media file; and the electronic device saves the first media file, the file information of the first media file, and a mapping relationship between the first media file and the file information of the first media file.

In embodiments of this application, when detecting that the first media file is saved, the electronic device outputs a label editing window (the first window) to prompt a user to edit the file information of the media file. The electronic device saves the first media file, the file information of the first media file, and the mapping relationship between the first media file and the file information. Subsequently, the electronic device 100 may perform file browsing and indexing based on file information edited by the user. In embodiments of this application, generation of file information of a media file does not strongly depend on analysis of the media file, and a media file that cannot be recognized may be managed by manually entering file information by the user. In this way, the user can edit the file information based on understanding and a category preference of the user. In addition, in a subsequent browsing scenario, the user may browse and search for the media file based on edited file information, to improve overall efficiency, and avoid a problem that some new media formats cannot be supported by an original analysis program of the electronic device or an analysis process for some large media files is long.

With reference to the first aspect, in a possible implementation, before the electronic device receives the first user operation, the method further includes: The electronic device determines a preset condition, where the preset condition is for screening a media file saved by the electronic device; and that the electronic device determines the preset condition includes: The electronic device determines the preset condition based on an operation of a user; or the electronic device determines the preset condition based on a status of the electronic device. In this way, a media file that does not meet the condition can be screened out, and subsequent operations are omitted, to save resources.

With reference to the first aspect, in a possible implementation, that the electronic device outputs the first window for the first media file based on the first user operation includes: The electronic device obtains related information of the first media file based on the first user operation; and the electronic device determines that the related information of the first media file meets the preset condition, and outputs the first window for the first media file.

With reference to the first aspect, in a possible implementation, the related information of the first media file includes an application saving the first media file, and that the electronic device determines that the related information of the first media file meets the preset condition includes: The electronic device determines that the application saving the first media file is a preset application.

With reference to the first aspect, in a possible implementation, the related information of the first media file includes a storage path of the first media file, and that the electronic device determines that the related information of the first media file meets the preset condition includes: The electronic device determines that the storage path of the first media file is a preset path.

With reference to the first aspect, in a possible implementation, the related information of the first media file includes a media file type of the first media file, and that the electronic device determines that the related information of the first media file meets the preset condition includes: The electronic device determines that the media file type of the first media file is a preset file type.

Herein, the electronic device 100 supports the user in selecting to monitor and manage file changes of specific applications, folders (storage paths), or media file types. A manner of saving a file is reconstructed at a system level. For example, when monitoring a saving behavior, the electronic device 100 recognizes an identity of an application (including information such as a package name, a signature, and an application ID) that executes the saving behavior, to determine whether a specific application (a preset application) saves the file; or the electronic device 100 recognizes an absolute path for saving the media file in the saving behavior, to determine whether the file is saved on a specific path (a preset path); or whether the saved media file is a preset file type. In this way, a change of the media file can be monitored in real time, a saved media file is screened, and only a needed media file is managed, to improve processing efficiency of the electronic device 100 and save resources.

With reference to the first aspect, in a possible implementation, that the electronic device outputs the first window for the first media file based on the first user operation includes: The electronic device outputs a first notification for the first media file based on the first user operation, where the first notification indicates a user to edit the file information of the first media file; and the electronic device receives a second user operation for the first notification, and outputs the first window. Herein, after receiving the first user operation, the electronic device first outputs notification information to prompt the user to edit file information of the saved media file, and then outputs a label editing window (the first window) based on the user operation. In this way, a confirmation opportunity is provided for the user, to avoid a case in which the user does not want to edit a label but the electronic device directly pops up the label editing window, so as to improve user experience.

With reference to the first aspect, in a possible implementation, the file information includes one or more of the following: a virtual file name, one or more category names, and one or more label names. The virtual file name is used as a name of the first media file displayed when the first media file is browsed subsequently. The virtual file name does not affect an original physical file name, that is, does not affect functions such as invoking, viewing, and editing of the first media file by the first application. The category is for subsequently providing, for the user, a capability of querying a media file by category. The user may create several categories and specify that the first media file belongs to one or more categories. The label is for subsequently providing, for the user, a capability of querying a media file by label. The user may add and determine one or more pieces of label information based on understanding of the user for a current media file.

In a possible implementation, after that the electronic device saves the first media file, the file information of the first media file, and a mapping relationship between the first media file and the file information of the first media file, the method further includes: The electronic device displays the first media file based on the file information of the first media file. The file information includes information such as a virtual file name, a category, and a label. For example, a manner of browsing "By virtual file name", browsing "By category", and browsing "By label" may be provided. A plurality of media files may belong to a same category or a same label. The electronic device may display a category list and a label list based on the file information of the media file. The electronic device may also display a virtual file name of the media file based on the file information of the media file, so that the user can intuitively view the virtual file name of the media file.

With reference to the first aspect, in a possible implementation, the file information of the first media file includes the one or more label names, and the method further includes: The electronic device receives a search instruction, where the search instruction includes a first label name; the electronic device performs indexing based on the first label name, where the first label name is one of the one or more label names; and the electronic device displays one or more media files that have a mapping relationship with the first label name, where the one or more media files include the first media file. Herein, a manner in which the electronic device searches for the first media file by label in the file information is described.

With reference to the first aspect, in a possible implementation, that the electronic device outputs the first window for the first media file based on the first user operation includes: The electronic device detects, through a first interface, a saving operation on the first media file, where the first interface is configured to be invoked to save a media file; and the electronic device outputs the first window for the first media file.

With reference to the first aspect, in a possible implementation, the first user operation is further for saving a second media file, the first window is further for providing a manner of editing file information of the second media file, and the method further includes: The electronic device obtains the file information of the second media file; and the electronic device saves the second media file, the file information of the second media file, and a mapping relationship between the second media file and the file information of the second media file. An application scenario in which the electronic device simultaneously saves a plurality of media files is described herein. The first window provided by the electronic device may provide a capability of editing file information of the plurality of media files in a unified manner. In this case, the file information of the first media file is the same as the file information of the second media file.

With reference to the first aspect, in a possible implementation, the first user operation is further for saving a second media file, and the method further includes: The electronic device displays a second window for the second media file, where the second window is for providing a manner of editing file information of the second media file; the electronic device obtains the file information of the second media file; and the electronic device saves the second media file, the file information of the second media file, and a mapping relationship between the second media file and the file information of the second media file. Herein, an application scenario in which the electronic device simultaneously saves a plurality of media files is described. The electronic device separately provides the first window and the second window for the first media file and the second media file. The user may separately edit the file information of the plurality of media files. In this case, the file information of the first media file may be different from the file information of the second media file.

According to a second aspect, this application provides an electronic device, including one or more processors and one or more memories. The one or more memories are coupled to the one or more processors, the one or more memories are configured to store computer program code, and the computer program code includes computer instructions. When the computer instructions are run on the processor, the electronic device is enabled to perform the media file management method in any possible implementation of the foregoing aspect.

According to a third aspect, an embodiment of this application provides a computer storage medium, including computer instructions. When the computer instructions are run on an electronic device, a communication apparatus is enabled to perform the media file management method in any possible implementation of any foregoing aspect.

According to a fourth aspect, an embodiment of this application provides a computer program product. When the computer program product runs on a computer, the computer is enabled to perform the media file management method in any possible implementation of any foregoing aspect.

### BRIEF DESCRIPTION OF DRAWINGS

FIG. 1 is a schematic diagram of a hardware structure of an electronic device according to an embodiment of this application;
FIG. 2a to FIG. 2d are a group of schematic diagrams of an application scenario according to an embodiment of this application;
FIG. 3a to FIG. 3c are another group of schematic diagrams of an application scenario according to an embodiment of this application;
FIG. 4a to FIG. 4d are another group of schematic diagrams of an application scenario according to an embodiment of this application;
FIG. 5a and FIG. 5b are another group of schematic diagrams of an application scenario according to an embodiment of this application;
FIG. 6a and FIG. 6b are another group of schematic diagrams of an application scenario according to an embodiment of this application;
FIG. 7a to FIG. 7e are another group of schematic diagrams of an application scenario according to an embodiment of this application;
FIG. 8 is a schematic diagram of a software structure of an electronic device according to an embodiment of this application; and
FIG. 9 is a method flowchart of a media file management method according to an embodiment of this application.

### DESCRIPTION OF EMBODIMENTS

The following describes technical solutions in embodiments of this application with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two. The terms "middle", "left", "right", "up", "down", and the like are directions or positional relationships that are shown based on the accompanying drawings, and are merely for describing this application easily and simplifying the descriptions, rather than indicating or implying that an indicated apparatus or component needs to have a specific orientation or needs to be constructed and operated in a specific orientation, and therefore cannot be understood as a limitation on this application.

The following first describes an electronic device 100 in embodiments of this application.

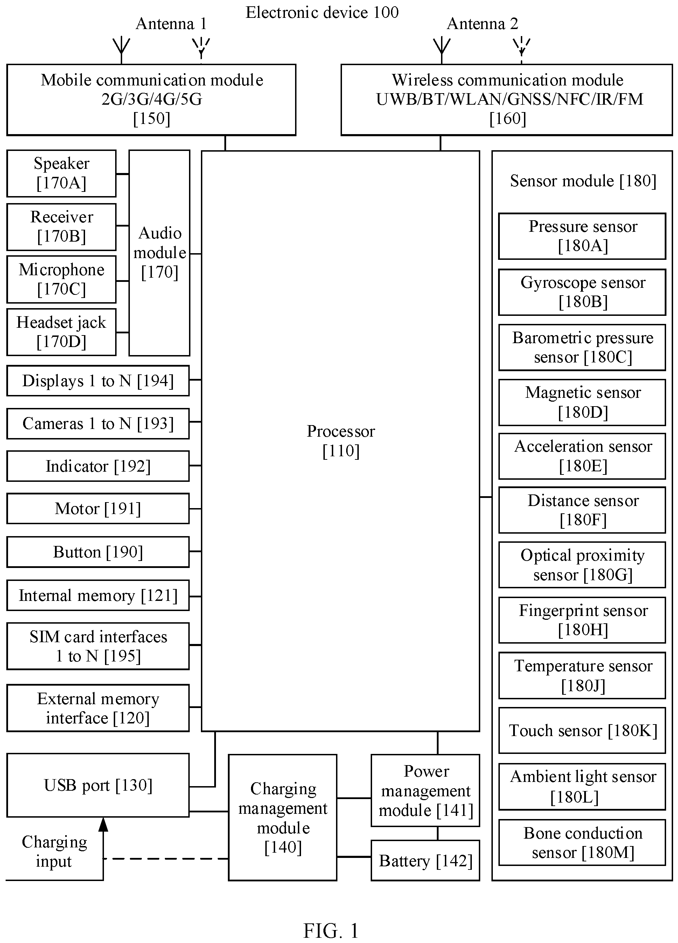

FIG. 1 is a schematic diagram of a structure of an example of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store the instructions or the data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus that includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to perform data transmission between the electronic device 100 and a peripheral device, or may be configured to connect to a headset to play audio by using the headset. The interface may be further configured to connect to another electronic device like an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit an electromagnetic wave to the modem processor for demodulation. The mobile communication module 150 may further amplify a signal modulated by the modem processor, and convert the amplified signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution applied to the electronic device 100, to wireless communication including a UWB, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some embodiments of this application, the display 194 displays interface content currently output by a system. For example, the interface content is an interface provided by an instant messaging application.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be for connecting to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a non-volatile memory, for example, at least one magnetic disk storage device, a flash memory device, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile electronic device platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. In some optional embodiments of this application, the pressure sensor 180A may be configured to: capture a pressure value generated when a finger part of the user touches the display, and transmit the pressure value to the processor, so that the processor identifies a finger part through which the user enters the user operation.

There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at different locations may correspond to different operation instructions. In some optional embodiments, the pressure sensor 180A may further calculate a quantity of touch points based on a detected signal, and transmit a calculated value to the processor, so that the processor identifies that the user enters a user operation through a single finger or a plurality of fingers.

The gyroscope sensor 180B may be configured to determine a motion posture of the electronic device 100. In some embodiments, an angular velocity of the electronic device 100 around three axes (namely, axes X, Y, and Z of the electronic device) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover leather case by using the magnetic sensor 180D. In some embodiments, when the electronic device 100 is a clamshell phone, the electronic device 100 may detect opening and closing of a flip cover by using the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application like switching between a landscape mode and a portrait mode or a pedometer. In some optional embodiments of this application, the acceleration sensor 180E may be configured to capture an acceleration value generated when a finger part of the user touches the display (or a finger of the user taps a rear side bezel of a side bezel of the electronic device 100), and transmit the acceleration value to the processor, so that the processor identifies a finger part through which the user enters a user operation.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a display for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch operation is an operation that the user touches the display 194 by using a hand, an elbow, a stylus, or the like. The touch sensor may transfer the detected touch operation to the application processor to determine a type of a touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may also be disposed in the headset, to combine into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100.

Embodiments of this application relate to operations such as categorizing, saving, and searching on multimedia files such as pictures and videos. The electronic device 100 may categorize an obtained multimedia file, to help the user subsequently search for the multimedia file based on category information.

Currently, in some possible implementations, when the electronic device 100 receives a picture saving instruction, the electronic device 100 obtains picture information of a to-be-saved picture, and the picture information includes picture content, a picture source application, time information, and the like. The electronic device 100 determines, based on the picture information, a picture label that matches the picture, and records a mapping relationship between the picture and the picture label. The electronic device 100 categorizes and saves the picture based on the picture label.

The electronic device 100 can recognize picture content by using a local artificial intelligence (Artificial Intelligence, AI) or an online AI recognition capability, determine a picture label of a picture based on the picture content, and categorize the picture. For example, based on facial recognition, the electronic device 100 can recognize pictures including different characters, and determine a label of each picture based on the characters, and the user may name the characters, to implement label customization. For another example, based on object recognition, the electronic device 100 can recognize pictures including food, landscape, building, and the like, to determine a label of each picture. After AI recognition, the electronic device 100 provides a capability of searching for and browsing a picture based on a picture label.

In this way, when pictures are browsed subsequently, the pictures may be managed in batches based on picture labels, including operations such as searching, browsing, and deleting. However, in this manner, recognition and analysis of picture saving are global, and the electronic device 100 also recognizes and analyzes a picture whose picture label does not need to be determined, which causes unnecessary performance waste. In addition, when a picture with a picture label is categorized and saved, an absolute path on which a picture source application saves a file is actually modified, which affects a function of the picture source application. If the file saved by the picture source application is copied and saved as a new file, extra space is occupied, and overall effective utilization of saving of the electronic device 100 is affected.

Embodiments of this application provide a media file management method. The electronic device 100 may monitor a change status (for example, new adding or modification) of a media file (for example, a picture, a video, or music) saved in some applications, or monitor a change status of a media file in/on some folders/paths, to avoid consumption of global monitoring and analysis, so as to improve overall efficiency. For these added new or modified media files, the electronic device 100 may provide a manual intervention channel for a user, and add a manner of adding information such as virtual file name information, category information, and label information. Analyzing the media file without depending on a machine can improve a capability of the electronic device 100 in managing a media file type, to avoid a problem that some new media formats cannot be supported by an original analysis program of the electronic device 100 or an analysis process for some large media files is long.

With reference to an application scenario, the following describes an implementation of a media file management method provided in this application on a display interface.

First, an example in which the electronic device 100 is a smartphone is used to describe an example of an application interface of the media file management method displayed on the electronic device 100.

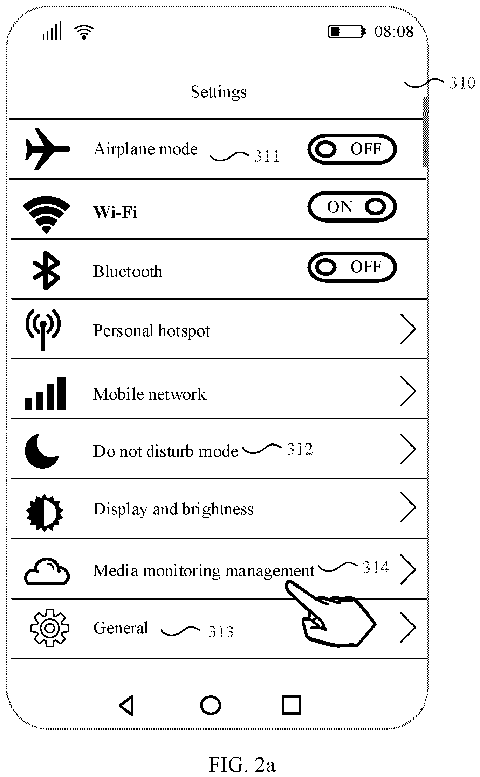

FIG. 2a to FIG. 3c show a monitoring setting manner before the electronic device 100 monitors a media file, including an app that can be monitored, a monitored path, a monitored media file type, and the like.

FIG. 2a shows an example of a setting interface 310 on the electronic device 100. The setting interface 310 includes a plurality of function options that can be set, for example, turning on or turning off an airplane mode 311, turning on or turning off Wi-Fi, turning on or turning off Bluetooth, setting a personal hotspot, setting a mobile network, setting a Do Not Disturb mode 312, setting display and brightness, setting a general mode 313, and setting media monitoring management 314.

The airplane mode 311, the Do Not Disturb mode 312, and the general mode 313 are running modes provided by the electronic device 100. In different running modes, some function settings of the electronic device 100 are different.

The media monitoring management 314 is configured to set a monitoring management policy for a media file. The electronic device 100 may enter, by using the function option, namely, the media monitoring management 314, the setting interface for monitoring the media file.

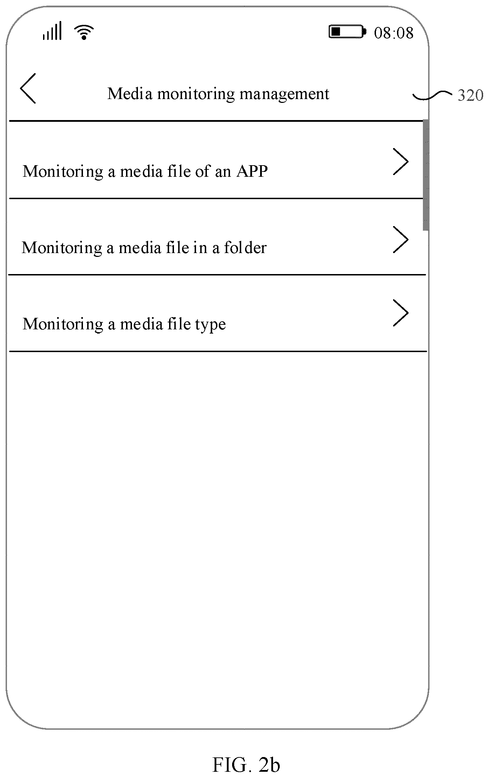

In some embodiments, the electronic device 100 may set a monitored path, application, and media file type, to determine specific paths, applications, and media file types that need to be monitored. For example, as shown in FIG. 2b, when the electronic device 100 receives a user operation on the function option, namely, the media monitoring management 314, the electronic device 100 displays a user interface 320 shown in FIG. 2b. The user interface 320 shows three monitoring manners, including monitoring a media file of an app, monitoring a media file in a folder, and monitoring a media file type.

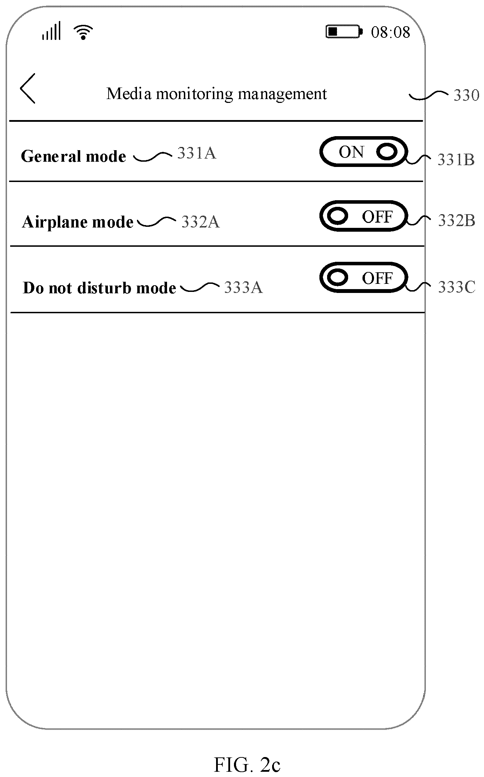

In some embodiments, the electronic device 100 may set a running mode of monitoring, and determine specific running modes in which a monitoring management capability needs to be enabled. For example, as shown in FIG. 2c, when the electronic device 100 receives a user operation on the function option, namely, the media monitoring management 314, the electronic device 100 displays a user interface 330 shown in FIG. 2c. The user interface 330 shows three running modes, including a general mode 331A, an airplane mode 332A, and a Do Not Disturb mode 333A. The user can enable or disable the monitoring management capability for the media file in different running modes. For example, in FIG. 2c, an on/off icon 331B of the general-purpose mode 331A is set to be on, and an on/off icon 332B of the airplane mode 332A and an on/off icon 333B of the Do Not Disturb mode 333A are set to be off. When a current running mode of the electronic device 100 is the general mode, the electronic device 100 enables the monitoring management capability, and the electronic device 100 performs monitoring based on a monitoring policy (which may be set by the user or may be preset by the electronic device 100) corresponding to the monitoring management capability. When a current running mode of the electronic device 100 is the Do Not Disturb mode or the airplane mode, the electronic device 100 disables the monitoring management capability.

Further, the electronic device 100 may separately determine corresponding monitoring policies for different running modes. For example, FIG. 2c shows three running modes: the general mode 331A, the airplane mode 332A, and the Do Not Disturb mode 333A. The user may select to enter a monitoring policy setting interface in each running mode, to set a monitoring policy in each running mode. For example, when the electronic device 100 receives a user operation on the general-purpose mode 331A, the airplane mode 332A, or the Do Not Disturb mode 333A, the electronic device 100 displays the user interface 320 shown in FIG. 2b, and provides a manner of further setting a specific monitoring policy in the running mode. The electronic device 100 determines whether the monitoring management capability is enabled in the current running mode, and if the monitoring management capability is enabled, the monitoring policy in the current running mode is used.

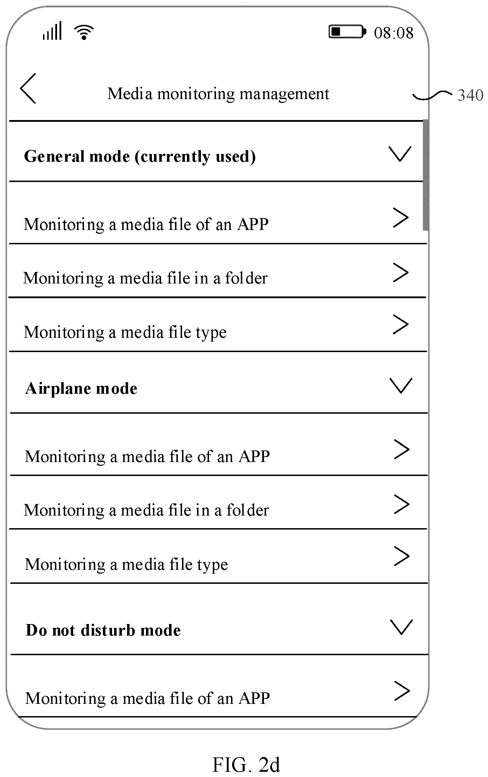

In some embodiments, the electronic device 100 may respectively determine corresponding monitoring policies for different running modes, and the electronic device 100 determines the current running mode, and uses the monitoring policy in the current running mode. For example, a user interface 340 in FIG. 2d shows monitoring policy setting options in different running modes. The electronic device 100 may set the monitored path, application, and media file type, and determine the specific paths, the applications, and the media file types that need to be monitored.

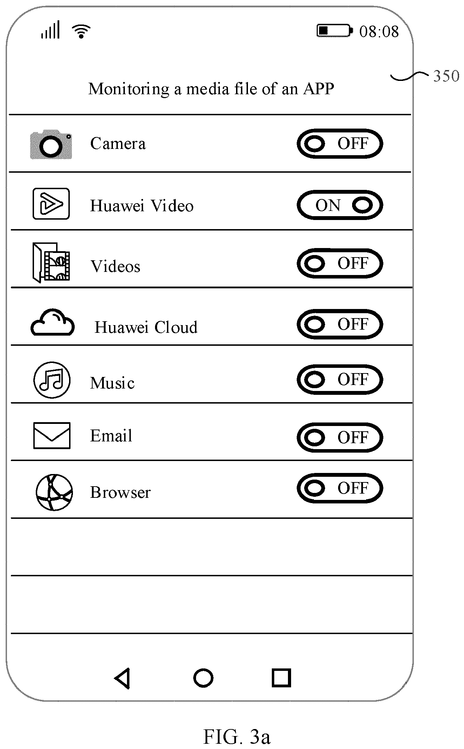

FIG. 3a shows a setting interface 350 for monitoring a media file of an app. The setting interface 350 includes setting options of a plurality of applications that can be monitored, including Camera, Huawei Video, Music, Email, Browser, and the like. The user may select whether to enable monitoring for the shown setting options of the applications. When the application that is selected to enable monitoring saves a media file, the electronic device 100 monitors the saving behavior, and the electronic device 100 outputs corresponding prompt information.

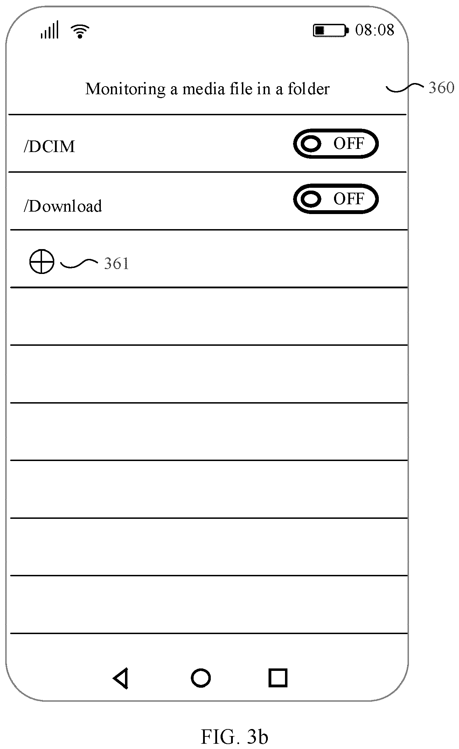

FIG. 3b shows a setting interface 360 for monitoring a media file in a folder. The setting interface 360 includes setting options of a plurality of file paths that can be monitored, including a digital camera image (Digital Camera Image, DCIM) folder, a download Download folder, and the like. The user may select whether to enable monitoring for the shown setting options of the folders. When the folder that is selected to enable monitoring saves a media file, the electronic device 100 monitors the saving behavior, and the electronic device 100 outputs corresponding prompt information. Optionally, the setting interface 360 further includes a control 361. Based on the control 361, the user may customarily add a file path that the user wants to monitor.

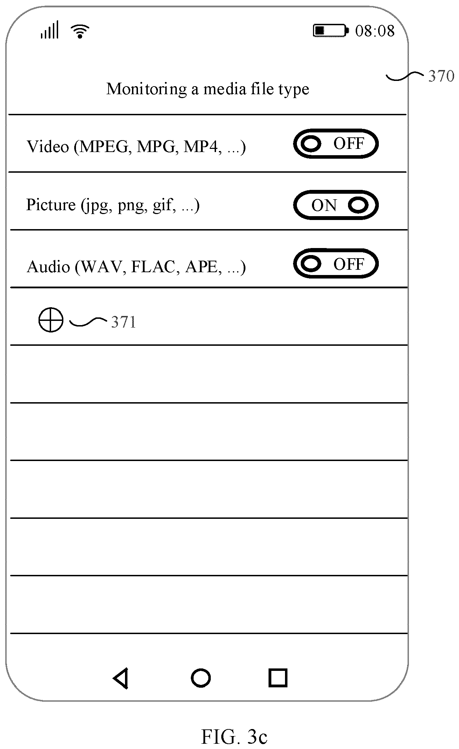

FIG. 3c shows a setting interface 370 for monitoring a media file type. The setting interface 370 includes setting options of a plurality of media file types that can be monitored, including a video, a picture, an audio, a document, a file, and the like. The media file types may be specific file formats, for example, video formats including MP4, MKV, AVI, WMV, and the like; audio formats including CD, WAVE, AIFF, MPEG, MP3, WMA, and the like; picture formats including jpg, jpeg, png, gif, bmp, tiff, ai, and the like; and document format including TXT, DOC, XLS, PPT, DOCX, EXL, PDF, and the like. The user may select whether to enable monitoring for the shown setting options of the media file types. When the electronic device 100 monitors information that a media file type in a saving behavior is a media file type that is selected to enable monitoring, the electronic device 100 outputs corresponding prompt information. Optionally, the setting interface 370 further includes a control 371. Based on the control 371, the user may customarily add a media file type that the user wants to monitor.

In some embodiments, the electronic device 100 may globally enable or disable the monitoring management capability for the media file manually or automatically.

Optionally, the electronic device 100 may enable or disable the monitoring management capability based on a user operation. For example, in the setting interface 310 in FIG. 2a, the user may select to enable or disable the monitoring management capability by using the function option, namely, the media monitoring management 314.

Optionally, the electronic device 100 may determine, based on a current network status, a storage status, remaining power, a running rate, or the like, whether to enable or disable the monitoring management capability.

The foregoing describes an example of a setting manner provided before the electronic device 100 monitors the media file. Based on the setting, the electronic device 100 monitors a corresponding saving behavior, and outputs corresponding prompt information.

The following uses an application (a social application is used as an example in the following) that is selected to enable monitoring as an example. When the application saves a media file, the electronic device 100 monitors the saving behavior, and the electronic device 100 outputs corresponding prompt information.

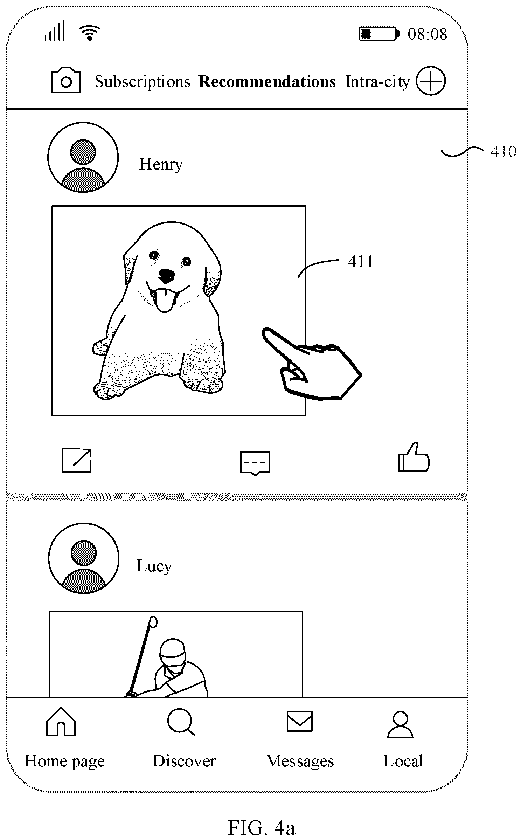

FIG. 4a shows an example of an application interface 410 of a social application. The application interface 410 includes a picture 411 post by a user (Henry). If the user wants to save the picture 411, the user may tap the picture 411, and in response to the tap operation, the electronic device 100 displays the picture 411 in full screen.

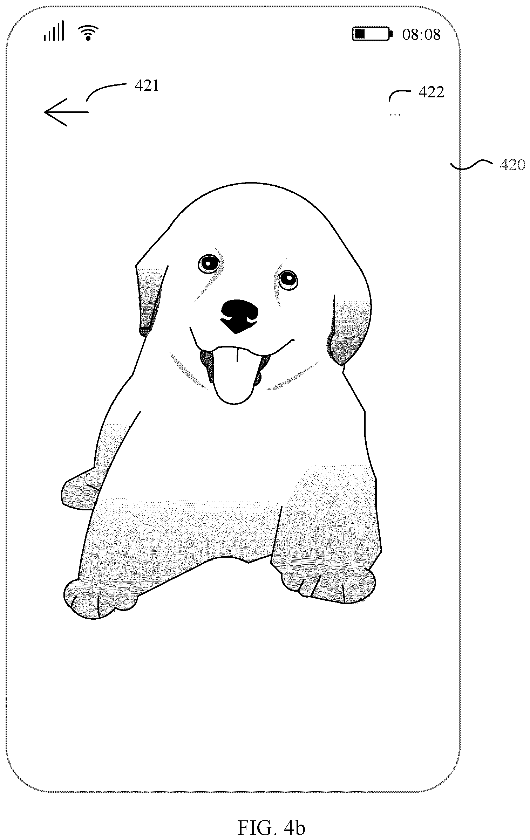

As shown in FIG. 4b, an application interface 420 in FIG. 4b displays the picture 411 in full screen, and the application interface 420 further includes a back control 421 and a function control 422.

The back control 421 is configured to return to an upper-level interface.

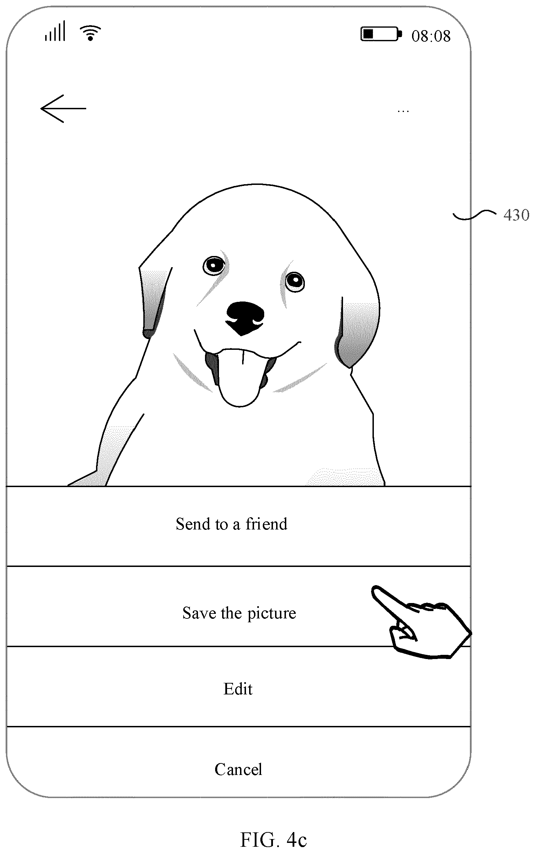

The function control 422 is configured to provide a function that can be executed for the picture 411, for example, saving, forwarding, and editing. When the electronic device 100 receives a user operation on the function control 422, the electronic device 100 outputs a function list for the user to select. As shown in FIG. 4c, the application interface 430 in FIG. 4c includes a function list for the picture 411. The function list shows, for example, several function options: Save the picture, Edit, Send to a friend, and Cancel.

For example, the electronic device 100 receives a user operation on the function option "Save the picture", the electronic device 100 saves the picture 411 to a local gallery, and the electronic device 100 monitors a saving behavior for the social application, and outputs corresponding prompt information. Optionally, the prompt information may be output in a form of a notification, or may be output in a form of a pop-up window or a window.

FIG. 4a to FIG. 4c are merely an example of a manner of saving the picture 411. For example, the electronic device 100 may further directly save the picture 411 based on the application interface 410 in FIG. 4a, and does not need to display the picture 411 in full screen. A manner of saving a media file is not limited in embodiments of this application.

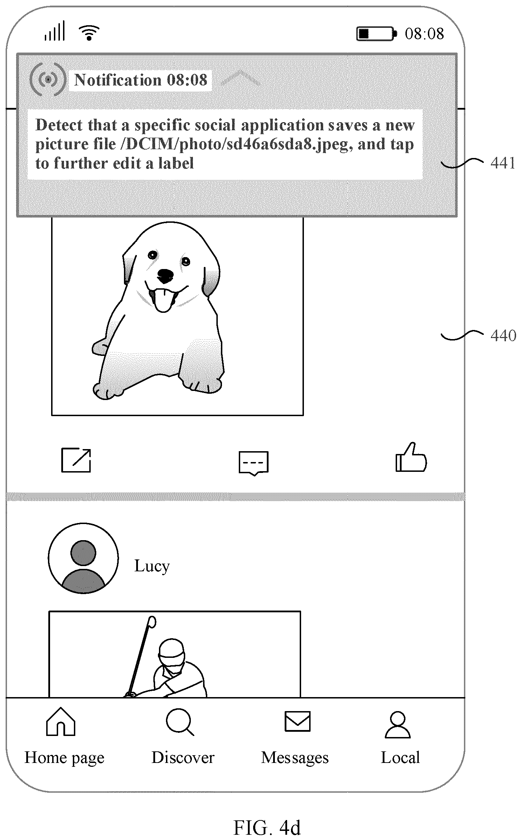

As shown in FIG. 4d, an application interface 440 in FIG. 4d includes a notification 441, and the electronic device 100 monitors a saving behavior (saving the picture 411) of the social application, and outputs corresponding prompt information (the notification 441). The notification 441 describes related information of the media file (picture 411) saved by the electronic device 100 and prompts the user to edit a label for the media file. A specific example in FIG. 4d is "Detect that a specific social application saves a new picture file /DCIM/photo/sd46a6sda8.jpeg, and tap to further edit a label", where /DCIM/photo/sd46a6sda8.jpeg is a storage path of the picture 411.

The electronic device 100 receives a tap operation on the notification 441, and the electronic device 100 outputs a label editing window for the picture 411. The label editing window is for providing a manner of editing file information of the picture 411 for the user.

In some embodiments, FIG. 4d is optional. When the electronic device 100 monitors the saving behavior (saving the picture 411) of the social application, the electronic device may directly output the label editing window for the picture 411.

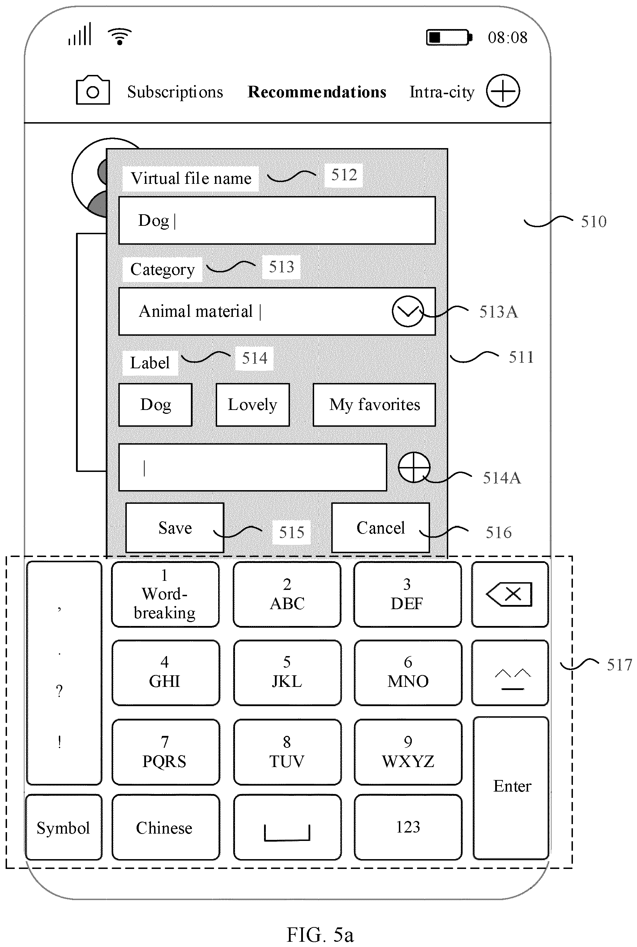

As shown in FIG. 5a, a user interface 510 in FIG. 5a shows an example of a label editing window 511 and an input keyboard 517. The label editing window 511 provides an editing manner for file information such as a virtual file name 512, a category 513, and a label 514, a saving control 515, and a cancel control 516. The editing manner includes text inputting, voice inputting, and the like.

The virtual file name 512 is a name of a media file used for subsequent browsing and display. A physical file name does not need to be changed, and an existing function of an original application is not affected. An original media file does not need to be saved as a new file, and no new file redundancy is added. For example, for the saved picture 411, an original file name is sd46a6sda8.jpeg, and the user may input a virtual file name "Dog" as a file name of the picture 411. This is more convenient than the original file name in subsequent searching, browsing, management, and understanding.

The category 513 is for subsequently providing, for the user, a capability of querying a media file by category. The user may create several categories and specify that the media file belongs to one or more categories. The user may alternatively view existing categories by using a function control 513A and select from the existing categories. The user may alternatively input a new category. For example, in FIG. 5a, the category of the picture 411 may be selected as "Animal material", and subsequently, the user may browse the corresponding picture 411 in the "Animal material" category.

The label 514 is for subsequently providing, for the user, a capability of querying a media file by label. The user may add and determine one or more pieces of label information based on the understanding of the user for the current media file, or may select from an existing label range. The electronic device 100 may add a label by using a function control 514A, and then the user selects from shown labels, for example, labels "Dog", "Lovely", and "My favorites" shown in FIG. 5a. The electronic device 100 may alternatively provide a recommended label based on an input label or information about the current media file, and the user selects from the recommended label. The information about the media file may include a name of an app that generates the file, a path of the file, time at which the file is generated, and a content feature of the file. For example, in FIG. 5a, the user selects labels of the picture 411 as "Dog" and "Lovely", and subsequently, the user may browse the corresponding picture 411 under the label "Dog" or "Lovely".

The saving control 515 is configured to save file information (the virtual file name, the category, and the label) determined by the user in the label editing window 511. The electronic device 100 receives a user operation on the saving control 515, saves the label information, and establishes a correspondence between the picture 411 and the label information.

The cancel control 516 is configured to cancel saving the file information determined by the user in the label editing window 511. The electronic device 100 receives a user operation on the cancel control 516, cancels saving the file information in the label editing window 511, and closes the label editing window 511.

In some embodiments, the electronic device 100 may provide recommended file information for a saved media file.

Optionally, the electronic device 100 may provide the recommended file information based on file content of the saved media file, and the user may select to save the recommended file information or re-enter file information that the user wants to save. For example, in FIG. 5a, the electronic device 100 performs picture recognition on the saved media file, and recognizes that content of the picture includes elements such as a dog and a person. In this case, the electronic device 100 may display a recommended virtual file name like "Dog" in the virtual file name 512 in the label editing window 511, display a recommended category like "Animal material" in the category 513, and display recommended labels such as "Dog", "Lovely", and "My favorites" in the label 514.

Optionally, the electronic device 100 may determine the recommended file information based on information such as a source application, a source device, saving time, a saving path, and a geographical location of the saved media file.

Optionally, the file information includes the virtual file name, the category, the label, and the like. The electronic device 100 may set the recommended virtual file name as a saving path of the saved media file by default, set the recommended category as a source application of the saved media file by default, set the recommended label as saving time of the saved media file by default, and the like. Optionally, the user may modify a default setting of the electronic device 100.

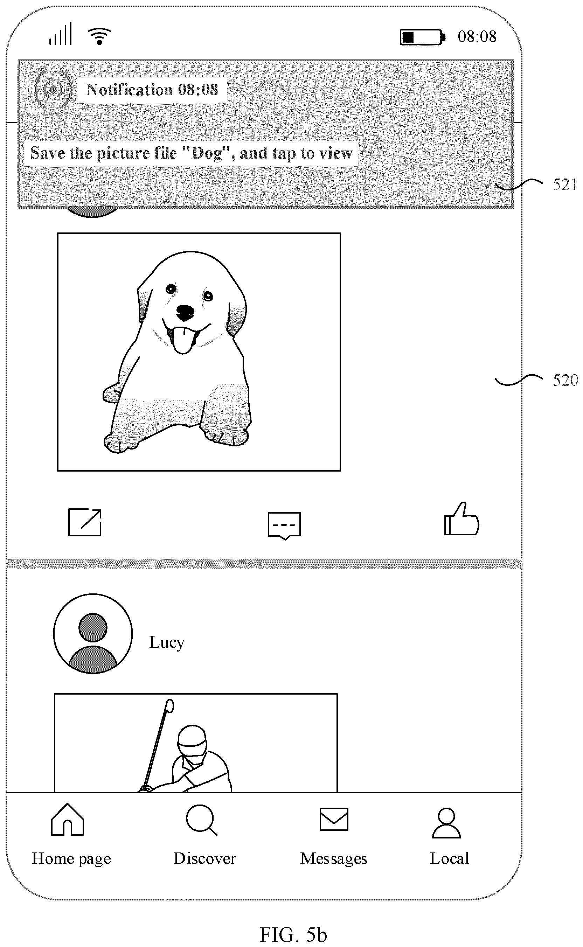

When the electronic device 100 receives a tap operation on the saving control 515, the electronic device 100 completes saving of the picture 411 and the file information of the picture 411, and outputs notification information indicating that saving is completed. As shown in FIG. 5b, an application interface 520 shown in FIG. 5b includes a notification 521, and the notification 521 indicates that the picture file "Dog" (namely, the picture 411) is saved. Optionally, the notification information provides an entry for the user to view the picture 411 and the file information of the picture 411. When the electronic device 100 receives a user operation on the notification 521, the electronic device 100 displays the picture 411 and the file information of the picture 411.

Optionally, the electronic device 100 receives a tap operation on the cancel control 516, and the electronic device 100 cancels saving the file information of the picture 411, and outputs notification information of canceling editing the file information.

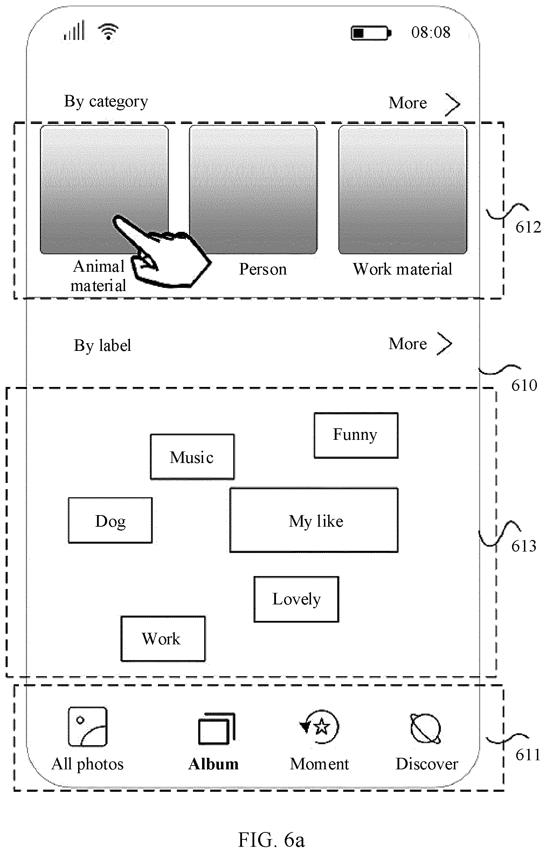

After the electronic device 100 saves the picture 411 and the file information of the picture 411, the user may view the picture 411 and the file information of the picture 411 based on a path on which the media file is saved. FIG. 6a shows an application interface 610 of a gallery application. The gallery application may view a media file saved in the electronic device 100. The application interface 610 includes a category list 612, a label name area 613, and a menu tray 611.

The menu tray 611 includes four page options: "All photos", "Album", "Moment", and "Discover". If the "Album" option is selected currently, content displayed on the application interface 610 is page content corresponding to "Album". The application interface 610 may provide a manner of viewing "By category" and viewing "By label".

In the manner of viewing "By category", the electronic device 100 displays the category list 612, and the category list 612 displays entries of categories such as "Animal material", "Person", and "Work material" in which media files are currently saved. Optionally, each entry may display a screenshot of a latest video in a corresponding category.

In the manner of viewing "By label", the electronic device 100 displays the label name area 613, and the label name area 613 includes a plurality of label names, for example, includes "Dog", "Lovely", and "My favorites", to facilitate tapping by the user. In response to a tap operation of the user, a media file list page of a corresponding label may be displayed.

Optionally, a size of each label name in the label name area 613 may be properly adjusted and distinguished based on a quantity of media files of the corresponding label.

After the user taps a specific category or a specific label, the corresponding media file list page is displayed. The media file list page includes thumbnails of one or more media files, and each media file correspondingly displays a virtual file name edited by the user, to avoid a problem that a file name automatically generated by an original application is displayed as a character string, so as to improve user experience.

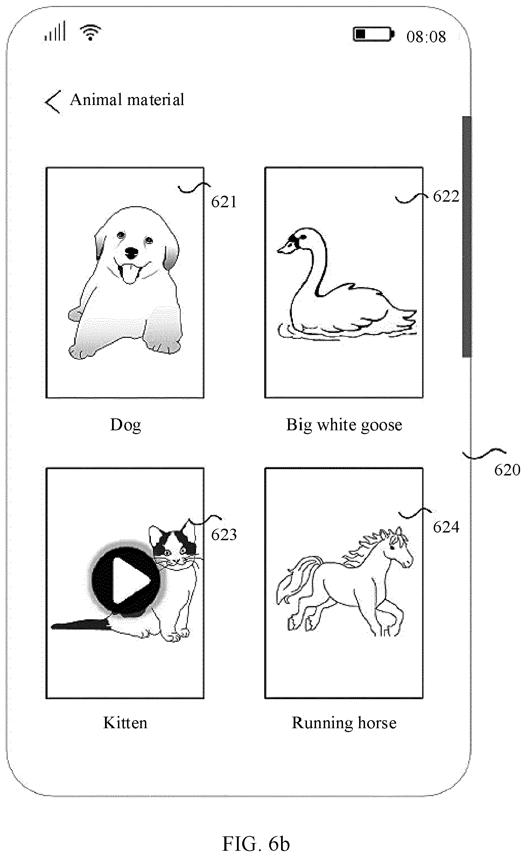

As shown in FIG. 6b, the electronic device 100 receives a user operation on "Animal material" in the category list 612, and the electronic device 100 displays a corresponding media file list page 620. The media file list page 620 displays thumbnails of a plurality of media files such as pictures or videos, for example, a picture 621, a picture 622, a video 623, and a picture 624. Category information of these media files is all "Animal material". Each media file correspondingly displays a virtual file name. A virtual file name corresponding to the picture 621 is "Dog"; a virtual file name corresponding to the picture 622 is "Big white goose"; a virtual file name corresponding to the video 623 is "Kitten"; and a virtual file name corresponding to the picture 624 is "Running horse". It can be learned that the picture 621 is the picture 411 saved in FIG. 4a to FIG. 4c. In a process of saving the picture 411, that is, in FIG. 5a, the electronic device 100 receives the related information (that is, the virtual file name is "Dog", and the category is "Animal material") of the picture 411 edited by the user. In this case, in the gallery application, the user may find, based on information that the category is "Animal material" and the virtual file name is "Dog", the picture 621 corresponding to the picture 411. When the electronic device 100 receives a user operation on the picture 621, the electronic device 100 displays the picture 621 in full screen, and displays the user interface 420 shown in FIG. 4b.

The foregoing briefly shows an application scenario of the media file management method in embodiments of this application. The electronic device 100 monitors a saving behavior for the picture 411, provides a manual intervention channel (the label editing window 511) for the user, and adds the information such as the virtual file name information, the category information, and label information for the picture 411. Subsequently, based on the virtual file name information, the category information, and the label information, it may be convenient for the user to search for and manage the picture 411. Optionally, the electronic device 100 can provide, for each saved media file, a manner of adding information such as virtual file name information, category information, and label information.

In some application scenarios, the electronic device 100 simultaneously saves a plurality of media files. The user may edit file information of the plurality of media files in a unified manner, or may select, from the plurality of media files, a media file whose file information needs to be edited.

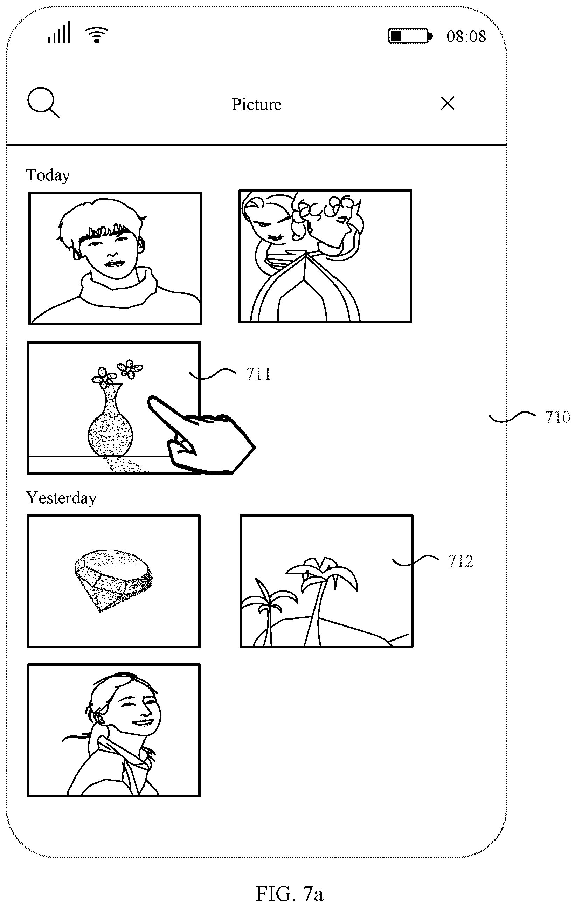

FIG. 7a shows an example of an application interface 710 of a picture application. The application interface 710 includes a plurality of pictures (for example, a picture 711 and a picture 712), and the user may select one or more of the pictures and save them locally.

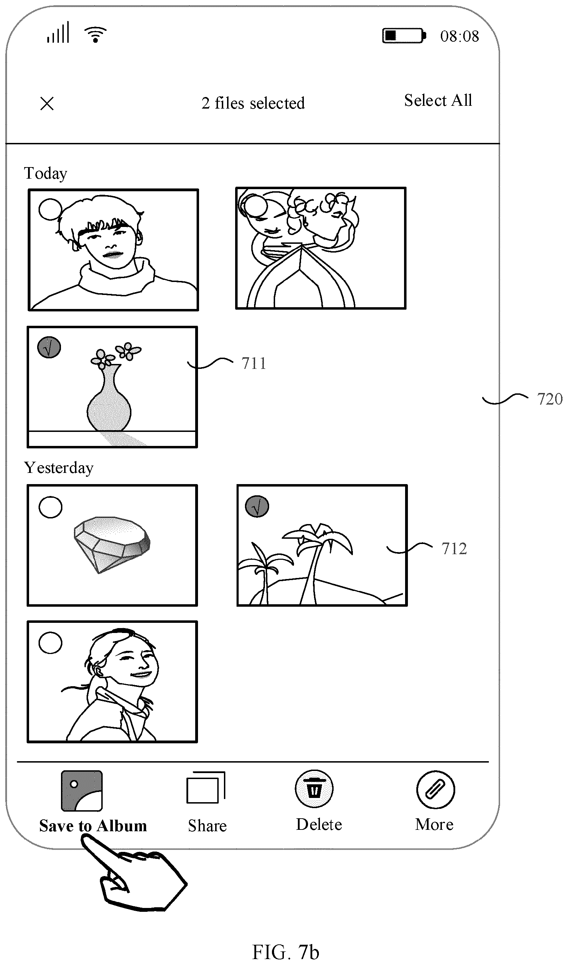

The electronic device 100 receives a user operation (for example, a touch and hold operation) on the picture 711, and displays an application interface 720 shown in FIG. 7b. The application interface 720 is a picture editing page. The user may select one or more needed pictures to perform a unified operation. A function tray 713 in the application interface 720 includes several function controls: "Save to Album", "Share", "Delete", and "More". It can be learned that in FIG. 7b, the user selects two files: the picture 711 and the picture 712, and the electronic device 100 may perform a unified function implementation on the two files based on the function tray 713.

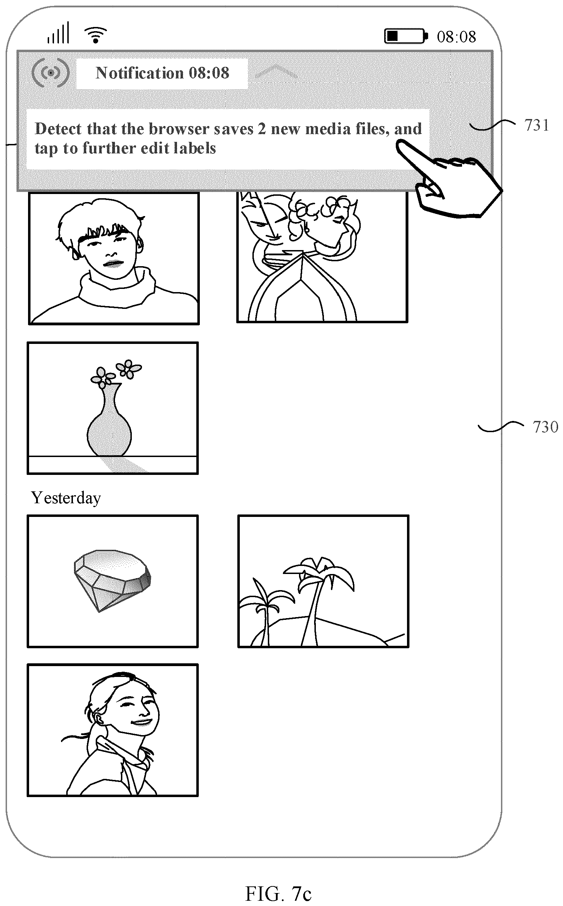

In FIG. 7b, the electronic device 100 receives a user operation on the function control "Save to Album", and the electronic device 100 saves the two files (the picture 711 and the picture 712) to a local album, and outputs notification information for the two files. For example, as shown in FIG. 7c, an application interface 730 in FIG. 7c includes a notification 731. The notification 731 describes related information of media files (the picture 711 and the picture 712) saved by the electronic device 100 and prompts the user to edit labels of the media files. A specific example in FIG. 7c is that "Detect that the browser saves 2 new media files, and tap to further edit labels".

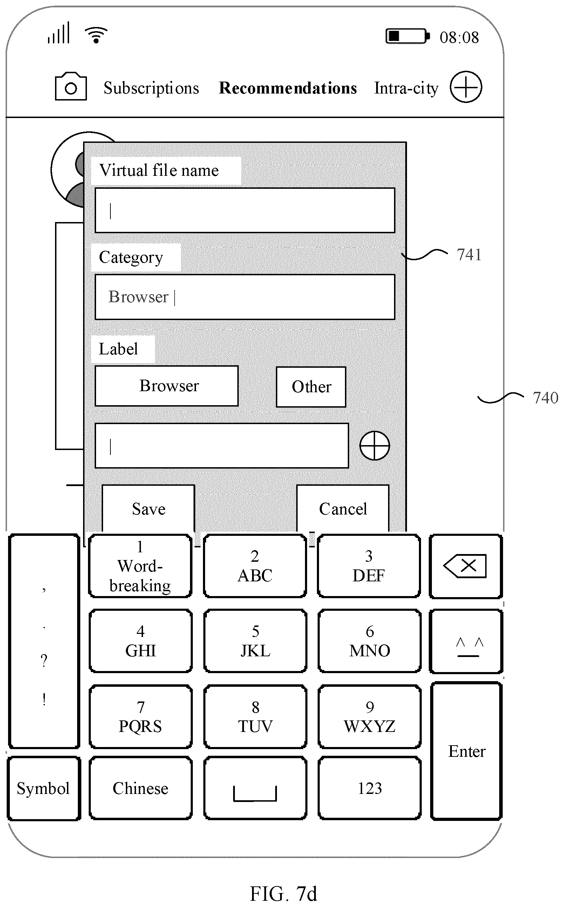

The electronic device 100 receives a tap operation on the notification 731, and the electronic device 100 outputs a label editing window for the picture 711 and the picture 712. The label editing window is for providing the user with a manner of editing file information of the picture 711 and the picture 712 in a unified manner. Based on the label editing window, the electronic device 100 may determine the file information of the picture 711 and the picture 712, where the file information of the picture 711 is the same as that of the picture 712. As shown in FIG. 7d, a user interface 740 in FIG. 7d shows an example of a label editing window 741. The label editing window 741 provides an editing manner for file information such as a virtual file name, a category, and a label. For specific descriptions of the label editing window 741, refer to related descriptions of the label editing window 511. Details are not described herein again.

In some embodiments, the electronic device 100 may provide recommended file information based on information such as file content, a source application, a source device, saving time, a saving path, and a geographical location of a saved media file, and the user may select to save the recommended file information or re-enter file information that the user wants to save. For example, if a picture source application of the picture 711 and the picture 712 is the browser, in FIG. 7d, the electronic device 100 may display, in the label editing window 741, that a recommended category is "Browser".

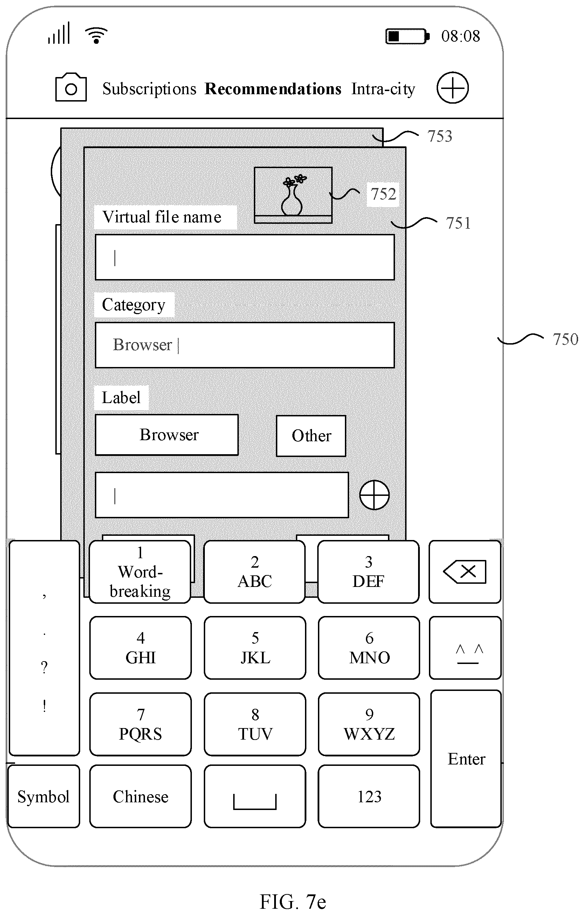

In some embodiments, the electronic device 100 receives a tap operation on the notification 731, and the electronic device 100 outputs two label editing windows for the picture 711 and the picture 712. The two label editing windows respectively provide manners of editing file information of the picture 711 and the picture 712. Based on the two label editing windows, the electronic device 100 may separately determine the file information of the picture 711 and the picture 712. For example, as shown in FIG. 7e, a user interface 750 in FIG. 7e shows an example of a label editing window 751 and a label editing window 753. For specific descriptions of the label editing window 751 and the label editing window 753 herein, refer to related descriptions of the label editing window 511. Details are not described herein again. The label editing window 751 covers the label editing window 753, the label editing window 751 includes an indicator 752, and the indicator 752 indicates that the label editing window 751 is a label editing window of the picture 711. Optionally, the user may move the label editing window 751 and the label editing window 753, to enable the label editing window 753 to cover the label editing window 751.

In some embodiments, FIG. 7c is optional. When the electronic device 100 monitors a saving behavior (saving the picture 711 and the picture 712) of the social application, the electronic device may directly output the label editing window for the picture 711 and the picture 712.

The foregoing describes a display form of the media file management method in embodiments of this application on the display interface. The following specifically describes an implementation principle of the media file management method with reference to the display interface.

The following first describes a block diagram of a software structure of an electronic device 100 according to an embodiment of this application.

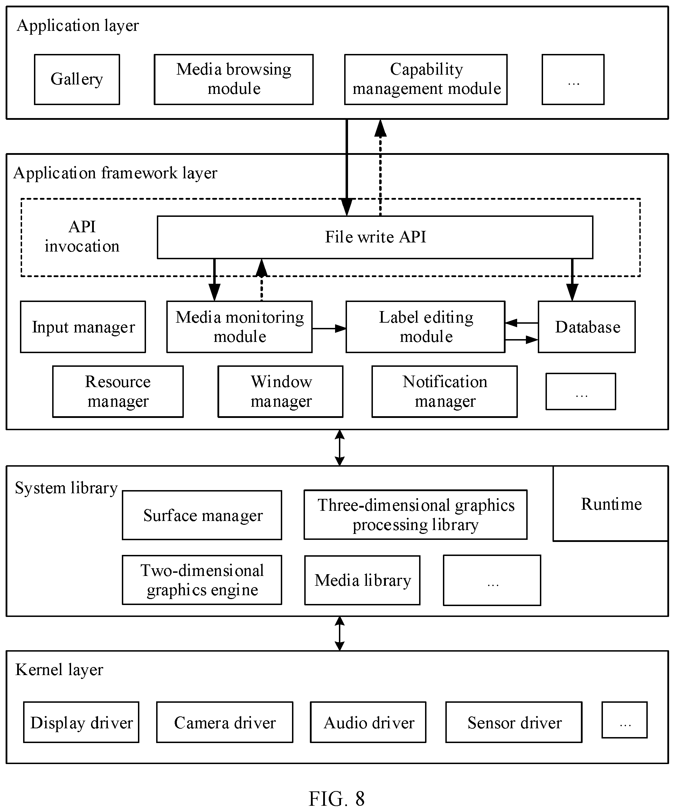

As shown in FIG. 8, in a layered architecture, software is divided into several layers, and each layer has a clear role and task. The layers communicate with each other through a software interface. In some embodiments, an Android system is divided into five layers: an application program layer, an application program framework layer, Android runtime (Android runtime) and a system library, a hardware abstraction layer (hard abstraction layer, HAL) (not shown in FIG. 8), and a kernel (kernel) layer from top to bottom.

The application layer may include a series of application packages, for example, including applications such as Camera, Gallery, Calendar, Phone, Map, Navigation, WLAN, Bluetooth, Music, Videos, Game, Shopping, Travel, Instant Messages (like Messages), and Social software. In addition, the application packages may further include system applications such as Home screen (namely, Desktop), Leftmost screen, Control center, Notification center, and System settings.

As shown in FIG. 8, in this embodiment of this application, the application packages further include a capability management module and a media browsing module. The capability management module may be used as a part of System settings, and is configured to provide a user with a select of whether to enable a monitoring management capability for a multimedia file. The monitoring management capability is for monitoring a saving behavior of an application for a media file. The user may enable the monitoring management capability, and set a corresponding monitoring management policy, that is, for specific applications, paths, or file data types, the monitoring management capability is enabled. The monitoring management policy is for screening a saving behavior, to select a saving behavior that meets a condition set by the user, and execute a subsequent action.

The media browsing module may be used as a part of a gallery application or a folder application, or may exist as an independent app, and provides a capability of searching for and browsing a media file based on file information (a source application, storage time, a file name, a category, a label, and the like).

The application program framework layer provides an application programming interface (application programming interface, API) and a programming framework for an application program at the application program layer. The application framework layer includes some predefined functions. The API is for implementing communication between the application layer and the system library, the HAL, or the kernel layer.

As shown in FIG. 8, the application framework layer may include a file write API, an input manager, a window manager (window manager), a content provider, a view system, a phone manager, a resource manager, a notification manager, a display manager, an activity manager (activity manager), a database, and the like. For ease of description, in FIG. 8, an example in which the application framework layer includes an input manager, a window provider, a notification manager, a resource manager, a media monitoring module, a label editing module, and a database is used for illustration. It should be noted that any two modules in the input manager, the window provider, the notification manager, the resource manager, the media monitoring module, the label editing module, and the database may invoke each other.

The file write API is invoked by an upper-layer application. The application invokes the file write API to write file data to the database, and the database saves the file data. In this embodiment of this application, a behavior of invoking the file write API to write the file data into the database is also referred to as a saving behavior, and the file write API may also be referred to as a file write interface or a first interface.

The input manager is configured to receive an instruction or a request reported by a lower layer like the kernel layer or the hardware abstraction layer.

The resource manager provides various resources such as a localized character string, an icon, a picture, a layout file, a video file, and an application resource file for an application.

The media monitoring module is configured to monitor the behavior in which the application invokes the file write API to save data, and determine, based on related information (an execution subject application, a saving path, a type of a saved media file, a format of the saved media file, and the like) of the saving behavior, whether the saving behavior meets a preset condition. In this embodiment of this application, the file write API is invoked to save the media file, and the media monitoring module monitors the saving behavior and determines the related information of the saving behavior, the related information includes the application that invokes the file write API, the path for saving the media file, the file format of the media file, the data type of the media file, and the like.

Optionally, the preset condition includes a user-set condition determined based on the capability management module. If the condition is met, the media monitoring module indicates the notification manager or the window manager to output prompt information. Optionally, the media monitoring module may be used as a part of the resource manager and a file system.

The window manager is configured to manage a window program. The window manager may obtain a size of the display, determine whether there is a status bar, perform screen locking, take a screenshot, and the like. In this application, the window manager is configured to: when the electronic device 100 meets a preset triggering condition, display a window including one or more shortcut controls.

The label editing module may be used as a part of the window manager, and is configured to pop up a label editing window on a display interface. The label editing window is for prompting the user that a new file is saved, and indicate the user to edit file information of the saved new file. The file information includes virtual file name information, category information, label information, and the like. For the label editing window herein, refer to the label editing window 511 in FIG. 5a. When determining that a monitored saving behavior meets the preset condition, the media monitoring module indicates the label editing module to output the label editing window, where the label editing window provides a manner of editing the file information of the saved media file for the user.

The notification manager enables an application to display notification information in a status bar, and may be configured to convey a notification message, which may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is played, the electronic device vibrates, or the indicator light blinks.

In some embodiments, when determining that the monitored saving behavior meets the preset condition, the media monitoring module indicates the notification manager to output a notification, to prompt the user that a new file is saved, and conveys related information of the saved media file to the user. Optionally, the user may edit file information of the saved new file based on the notification.

Optionally, when the notification manager receives a user operation on the notification, the label editing module is triggered to output a label editing window, to provide the manner of editing the file information of the saved media file for the user. For the notification herein, refer to the notification 441 shown in FIG. 4d. When the electronic device 100 receives the tap operation on the notification 441, the electronic device 100 outputs the label editing window 511 shown in FIG. 5a.

The database is configured to save media file content, a media file path, file information (a source application, storage time, a file name, a category, a label, and the like) of a media file, a mapping relationship between the media file and the file information (including a mapping relationship between the media file and a virtual file name, a mapping relationship between the media file and the category, a mapping relationship between the media file and the label), and the like. In this way, the user can quickly find a corresponding media file based on the file information of the media file.

The content provider is configured to: save and obtain data, and enable the data to be accessed by an application. The data may include a video, a picture, an audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including a notification icon of Messages may include a view for displaying a text and a view for displaying a picture.

The activity manager is configured to manage activities that are running in the system, including a process (process), an application, a service (service), task (task) information, and the like.

The display manager is configured to transmit display content to the kernel layer.

The phone manager is configured to provide a communication function for the electronic device 100, for example, management of a call status (including answering, declining, or the like).

The Android runtime includes a kernel library and a virtual machine. The Android runtime is responsible for scheduling and management of the Android system.

The kernel library includes two parts: a function that needs to be called in a Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3b layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer (HAL layer) is an interface layer between operating system software and a hardware component, and provides an interface for interaction between upper-layer software and lower-layer hardware. The HAL layer is for abstracting underlying hardware as software that includes a corresponding hardware interface. The underlying hardware device may be set by accessing the HAL layer. For example, a related hardware component may be enabled or disabled at the HAL layer. In some embodiments, a kernel architecture of the HAL layer includes at least one of C++ or C.

The kernel layer is a layer between hardware and software. The kernel layer includes at least a display driver, a camera driver, an audio driver, a sensor driver, a touch chip driver, an input (input) system, and the like. For ease of description, in FIG. 8, an example in which the kernel layer includes an input system, a touch chip driver, a display driver, and a storage driver is used for illustration. The display driver and the storage driver may be jointly disposed in a driver module.

It may be understood that the structure shown in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

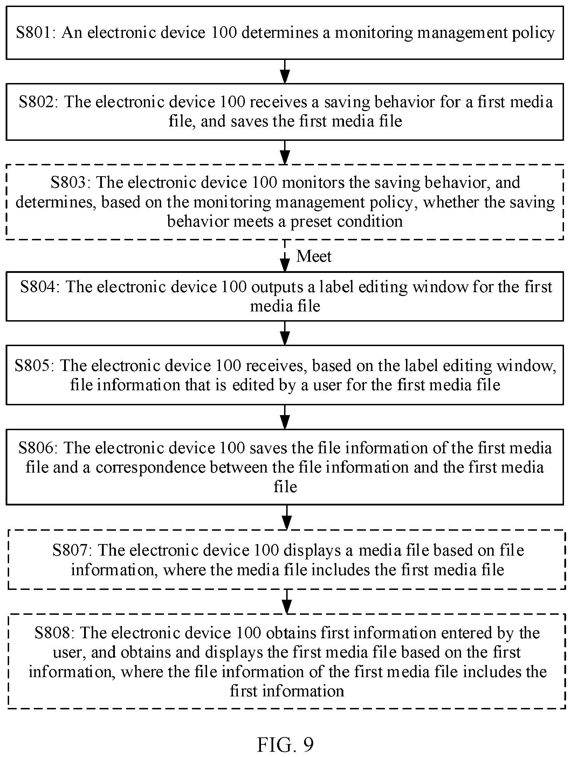

With reference to the block diagram of the software structure of the electronic device 100, the following describes a step procedure of a media file management method provided in this application. As shown in FIG. 9, the method may include the following steps.

Step S801: The electronic device 100 determines a monitoring management policy.

The electronic device 100 provides a monitoring management capability for a media file. The monitoring management capability is for monitoring a saving behavior of an application for the media file. A user may set a corresponding monitoring management policy. The monitoring management policy is for screen the saving behavior. For a saving behavior that meets a condition set by the user, the electronic device 100 outputs prompt information, where the prompt information describes related information of the media file corresponding to the saving behavior. The condition set by the user in the monitoring management policy relates to a monitored application, a monitored path, a monitored media file type, and the like.

In some embodiments, the electronic device 100 may respectively determine corresponding monitoring policies for different running modes, and the electronic device 100 determines a current running mode, and uses a monitoring policy in the current running mode. The running mode provided by the electronic device 100 includes a general mode, an airplane mode, a Do Not Disturb mode, and the like. Different running modes may correspond to different monitoring management policies. The monitoring management policy may be set by the user, or may be preset by the electronic device 100.

In some embodiments, the electronic device 100 may globally enable or disable the monitoring management capability for the media file manually or automatically.

Optionally, the electronic device 100 may determine, based on the current running mode, to enable or disable the monitoring management capability. The running mode of the electronic device 100 includes a Do Not Disturb mode, a general mode, an airplane mode, and the like. Optionally, when the current running mode of the electronic device 100 is the general mode, the electronic device 100 enables the monitoring management capability, and the electronic device 100 performs monitoring based on a monitoring management policy (which may be set by the user or may be preset by the electronic device 100) corresponding to the monitoring management capability. When the current running mode of the electronic device 100 is the Do Not Disturb mode, the electronic device 100 disables the monitoring management capability.

Further, the electronic device 100 may separately determine corresponding monitoring policies for different running modes, and monitoring management policies in different running modes may be different. The electronic device 100 determines whether the monitoring management capability is enabled in the current running mode, and if the monitoring management capability is enabled, the monitoring policy in the current running mode is used.

Optionally, the electronic device 100 may enable or disable, based on a current network status, a storage status, remaining power, a running rate, or the like, the monitoring management capability.

In some embodiments, the monitoring management policy may be set by the user, and the electronic device 100 determines the monitoring management policy based on a setting of the user.

Optionally, the user enables the monitoring management capability, and sets a monitoring management policy for an application. A plurality of applications are installed on the electronic device 100. The user may select one or more of the applications. The electronic device 100 manages a saving behavior of the one or more selected applications. Herein, reference may be made to the setting interface 330 shown in FIG. 3a. The user sets, based on the setting interface 330, an application that needs to be monitored and managed.

Optionally, the user enables the monitoring management capability, and sets a monitoring management policy for a specific path or a specific folder. For example, the user may select or add a target path, and the electronic device 100 manages a media file saved on the target path. Herein, reference may be made to the setting interface 340 shown in FIG. 3b. The user sets, based on the setting interface 340, a folder or a path that needs to be monitored and managed.

Optionally, the user enables the monitoring management capability, and sets a monitoring management policy for a media file type. The user may select a media file type that needs to be managed, and the electronic device 100 manages a saving behavior of a media file of the media file type. Herein, reference may be made to the setting interface 350 shown in FIG. 3c. The user sets, based on the setting interface 350, a media file type that needs to be monitored and managed.

In some embodiments, the monitoring management policy may be determined by the electronic device 100.

Optionally, a data storage directory of the application includes a private file directory and a public file directory, where the private file directory saves a temporary cache file, and the public file directory saves a file downloaded to a local storage of the electronic device 100. By default, the electronic device 100 does not monitor the private file directory, and monitors only the public file directory. In this way, interference on monitoring caused by a change of a temporarily cached media file in the private file directory can be avoided, to improve availability.

Optionally, for an installed new application, the electronic device 100 enables monitoring management on the application by default.

Step S802: The electronic device 100 receives a saving behavior for a first media file, and saves the first media file.

For example, herein, reference may be made to the application interfaces shown in FIG. 4a to FIG. 4d. The picture 411 is the first media file. The electronic device 100 receives the saving behavior for the picture 411, and saves the picture 411.

Step S803 is optional. Step S803: The electronic device 100 monitors the saving behavior, and determines, based on the monitoring management policy, whether the saving behavior meets a preset condition.

The electronic device 100 monitors a file write interface API. When the file write interface is invoked to save a media file, the electronic device 100 monitors the saving behavior, where the saving behavior is for saving the first media file. The electronic device 100 determines related information of the saving behavior, and determines, based on the monitoring management policy, whether the saving behavior meets the preset condition. The related information of the saving behavior includes an application that invokes the file write API, a path on which the first media file is saved, a file format of the first media file, a data type of the first media file, and the like.

For example, if the electronic device 100 runs a first application, the first application is a video application, and the electronic device 100 receives a saving operation for a video in the first application, the electronic device 100 downloads and saves the video. The video is the first media file. The electronic device 100 monitors a saving behavior of downloading and saving the video, and determines whether the saving behavior meets the preset condition. An executor of the saving behavior is the first application, and a type of the first media file is a video type.

For another example, the electronic device 100 displays a first interface, the electronic device 100 receives a screenshot operation on the first interface, and the electronic device 100 obtains and saves a screenshot picture of the first interface. The screenshot picture of the first interface is the first media file. The electronic device 100 monitors a saving behavior of saving the screenshot picture of the first interface, and determines whether the saving behavior meets the preset condition. An executor of the saving behavior is a screenshot application, and a type of the first media file is a picture type.

For another example, the electronic device 100 starts a camera application, and the electronic device 100 performs photographing based on the camera application. After the electronic device 100 receives a photographing instruction, the electronic device 100 obtains and saves a photographed photo. The photographed photo is the first media file. The electronic device 100 monitors a saving behavior of saving the photographed photo, and determines whether the saving behavior meets the preset condition. An executor of the saving behavior is the camera application, and a type of the first media file is a picture type.

It should be noted that the electronic device 100 monitors a saving behavior of invoking an interface of the electronic device 100. This does not affect a function of an application. In this way, a coupling relationship between a monitoring management capability provided in embodiments of this application and a third-party application is avoided, and practicability of the solution is improved.

In some embodiments, the preset condition includes the monitoring management policy set by the user in step S801.

Optionally, the preset condition includes that the executor of the saving behavior is a preset application, and the preset application is an application for which the user selects to enable the monitoring management capability. The electronic device 100 monitors the saving behavior, and determines that the executor of the saving behavior is the first application, that is, the application that invokes the file write API is the first application. If the preset application includes the first application, the saving behavior meets the preset condition; or if the preset application does not include the first application, the saving behavior does not meet the preset condition.

Optionally, the preset condition includes that in the saving behavior, a path for saving the media file is a preset path, and the preset path is a path on which the user selects to enable the monitoring management capability. The electronic device 100 monitors the saving behavior, and determines that in the saving behavior, the path for saving the media file is a first path. If the preset path includes the first path, the saving behavior meets the preset condition; or if the preset path does not include the first path, the saving behavior does not meet the preset condition.

Optionally, the preset condition includes that a media file type saved through the saving behavior is a preset file type, and the preset file type is a media file type for which the user selects to enable the monitoring management capability. The electronic device 100 monitors the saving behavior, and determines that the media file type saved through the saving behavior is the first type. If the preset file type includes the first type, the saving behavior meets the preset condition; or if the preset file type does not include the first type, the saving behavior does not meet the preset condition.

In some embodiments, the preset condition may further include the monitoring management policy determined by the electronic device 100 in step S801. Optionally, the preset condition includes that in the saving behavior, a path on which the media file is saved is the public file directory.

Step S804: If the condition is met, the electronic device 100 outputs a label editing window for the first media file.

The label editing window is for prompting the user that a new file (the first media file) is saved, and providing an editing window for the user to edit file information of the saved new file. The user may edit the file information through text inputting, voice inputting, and the like. The file information includes virtual file name information, category information, label information, and the like. For the label editing window herein, refer to the label editing window 511 in FIG. 5a. In this embodiment of this application, the label editing window may also be referred to as a first window.

The user may edit, based on the label editing window, information such as a virtual file name, a category, and a label of the first media file. The virtual file name is used as a name of the first media file displayed when the first media file is browsed subsequently. The virtual file name does not affect an original physical file name, that is, does not affect functions such as invoking, viewing, and editing of the first media file by the first application. An original media file does not need to be saved as a new file, and no new file redundancy is added. This is more convenient than an original file name in subsequent searching, browsing, management, and understanding.

The category is for subsequently providing, for the user, a capability of querying a media file by category. The user may create several categories and specify that the first media file belongs to one or more categories. The user may alternatively view existing categories and select from the existing categories. The user may alternatively input a new category. Optionally, the electronic device 100 may provide a recommended category based on information about the first media file. The information about the first media file may include an application name that generates the first media file, a storage path on which the first media file is saved, time at which the first media file is generated, a content characteristic of the first media file, and the like.

The label is for subsequently providing, for the user, a capability of querying a media file by label. The user may add and determine one or more pieces of label information based on understanding of the user for a current media file, or may select from an existing label range. In some embodiments, the electronic device 100 may alternatively provide a recommended label based on an input label or information about the first media file, and the user selects from the recommended label.

In some embodiments, before the electronic device 100 outputs the label editing window for the first media file, the electronic device 100 determines that the saving behavior meets the preset condition, and the electronic device 100 outputs a notification message. The notification message is for prompting the user that a new file (the first media file) is saved, and indicates the user to edit file information of the saved new file. The user needs to process the notification message, for example, tap the notification message. The electronic device 100 receives a user operation for the notification message, and the electronic device 100 outputs the label editing window. If the user does not process the notification message within a period of time, the user can view and process the notification message in a notification center.

It should be noted that, in some embodiments, the label editing window is a pop-up window suspended on an application interface, and the pop-up window does not affect a life cycle status of an application below, and does not affect a function of the application below.

In some embodiments, the foregoing step S802 is optional, and does not need to be determined based on the preset condition. After the electronic device 100 monitors the saving behavior, the electronic device 100 may directly output a label editing window of a media file saved through the saving behavior.

Step S805: The electronic device 100 receives, based on the label editing window, file information that is edited by the user for the first media file.

Step S806: The electronic device 100 saves the file information of the first media file and a correspondence between the file information and the first media file.

The electronic device 100 determines the file information corresponding to the first media file, and the electronic device 100 saves the first media file and the file information of the first media file, and establishes the correspondence between the file information and the first media file.

In some embodiments, that the file information includes information such as the virtual file name, the category, and the label is used as an example. The electronic device 100 establishes the correspondence between the file information and the first media file. The following describes, in a form of a table, the correspondence established by the electronic device 100.

In a file basic information table, a file ID and an original file path are used as a core primary key, to record the correspondence between a media file, a virtual file name, and a file category number. For example, information recorded in the following Table 1 includes "File ID", "Original file path", "Original file application", "Virtual file name", and "Category number". "File ID" records a unique ID of a media file, "Original file path" records a saving path of the media file, "Original file application" records a corresponding application that saves the media file, "Virtual file name" records a virtual file name entered by the user, and "Category number" records a number corresponding to a category selected by the user. Table 1 shows saving statuses of two media files. A media file whose file ID is F123 is the media file saved in FIG. 5a, an original file path of the media file is /DCIM/photo/sd46a6sda8.jpeg, an original file application is a specific social application, a virtual file name is "Dog", and a category number is 1.

**Table 1**

| File ID | Original file path | Original file application | Virtual file name | Category number |
|---|---|---|---|---|
| F123 | /DCIM/photo/ sd46a6sda8.jpeg | A specific social application | Dog | 1 |
| F567 | /DCIM/photo/fa6s8fdscf.jpeg | Camera | Rainy | 2 |
| | ... | | | |

In a file category information table, detailed information corresponding to a category number is mainly recorded. For example, five categories: "Pet material", "Funny video", "Music", "Girlfriend", and "Game video" are maintained in the following Table 2. Each category name has a category number, which is for associating with a media file. As shown in Table 2, it may be learned, based on Table 1, that the category number of the media file saved in FIG. 5a is 1, and it may be determined, based on Table 2, that the category name of the media file is "Pet material".

**Table 2**

| Category number | Category name |
|---|---|
| 1 | Pet material |
| 2 | Funny video |
| 3 | Music |
| 4 | Girlfriend |
| 5 | Game video |
| ... | |

In a file label information table, label information of each media file is mainly recorded, so that bidirectional searching can be performed based on a label or a file ID. For example, it may be learned, based on Table 1, that the file ID of the media file saved in FIG. 5a is F123, and it may be determined, based on Table 2, that the media file corresponds to three labels: "Dog", "Lovely", and "My favorites", as shown in Table 3.

**Table 3**

| File ID | Label name |
|---|---|
| F123 | Dog |
| F123 | Lovely |
| F123 | My favorites |
| F567 | Music |
| F567 | Funny |

Based on Table 1, Table 2, and Table 3, the electronic device 100 may query other file information based on one piece of the file information of the media file. For example, if the user wants to query the media file whose category name is "Pet material", the electronic device 100 may query, based on Table 2, that a category number of the media file whose category name is "Pet material" is 1, and then may query, based on Table 1, an original file path and a file ID of the media file whose category number is 1, so that the electronic device 100 may displays, based on the original file path, a corresponding media file, and may query, based on Table 3, a label name of each media file by using the file ID.

It may be understood that Table 1, Table 2, and Table 3 include the correspondence between the file information of the media file and the media file, which is an example of the correspondence. In embodiments of this application, another correspondence may be used to implement the correspondence between the file information of the media file and the media file.

Step S807 is optional. Step S807: The electronic device 100 displays the media file based on the file information, where the media file includes the first media file.

In some embodiments, the electronic device 100 no longer provides browsing based on a folder in an actual operating system and an actual file in the folder. Instead, the file is browsed based on the file information in the database. For example, a manner of browsing "By virtual file name", browsing "By category", and browsing "By label" may be provided. The file information includes information such as a virtual file name, a category, and a label. A plurality of media files may belong to a same category or a same label. The electronic device 100 may display a category list and a label list based on the file information of the media file, and display the first media file in a category list or a label list of the first media file. The electronic device 100 may also display a virtual file name of the media file based on the file information of the media file, so that the user can intuitively view the virtual file name of the media file.

When browsing by virtual file name, the electronic device 100 displays, by reading virtual file name data in the file basic information table (Table 1), a media file having a virtual file name. When browsing by category, the electronic device 100 displays a category list by reading category name data in the file category information table (Table 2). The category list displays entries of currently categories such as "Pet material" and "Funny video" in which media files are currently saved. The user can access a file list page through these entries, to view all media files in a category. When browsing by label, the electronic device 100 displays, by reading a label name field in the file label information table (Table 3), an entry of each label name for the user, to facilitate tapping by the user. The user can access a file list page through these labels, to view all media files under a label. Herein, reference may be made to related descriptions in FIG. 6a and FIG. 6b. FIG. 6a provides two manners: browsing by category and browsing by label. After the user taps a specific category or a specific label, a specific file list page is displayed. For example, in FIG. 6b, when the user selects to view a media file in the category "Animal material", the user may view the previously saved picture (the picture 411 shown in FIG. 4a) whose virtual file name is "Dog".

Optionally, one or more media files are displayed on the file list page, and the one or more media files are displayed as virtual file names, to improve user perception.

Step S808 is optional. Step S808: The electronic device 100 obtains first information entered by the user, and obtains and displays the first media file based on the first information, where the file information of the first media file includes the first information.

After the electronic device 100 saves the first media file, the file information of the first media file, and the correspondence between the file information and the first media file, the electronic device 100 may retrieve or find a needed media file based on the file information and the correspondence. The electronic device 100 obtains the first information entered by the user, where the file information of the first media file includes the first information. The electronic device 100 performs retrieval in the correspondence based on the first information, to obtain the first media file corresponding to the first information. The electronic device 100 displays the first media file.

In some embodiments, the file information includes information such as a virtual file name, one or more categories, and one or more labels. The electronic device 100 may provide manners of searching "By virtual file name", searching "By category", and searching "By label".

When searching by virtual file name, the electronic device 100 determines a virtual file name, determines, by reading virtual file name data in the file basic information table (Table 1), an original file path corresponding to the virtual file name, and displays a corresponding media file based on the original file path. When searching by category, the electronic device 100 determines a category name, determines, by reading category name data in the file category information table (Table 2), a category number corresponding to the category name, then reads a category number in the file basic information table (Table 1), determines original file paths of one or more media files corresponding to the category number, and displays the corresponding one or more media files based on the original file paths. When searching by label, the electronic device 100 determines a label name, determines, by reading label name data in the file label information table (Table 3), one or more file IDs corresponding to the label name, then reads the file IDs in the file basic information table (Table 1), determines original file paths respectively corresponding to the one or more file IDs, and displays the corresponding one or more media files based on the original file paths.

This embodiment of this application provides a system-level monitoring management capability, to support the user in selecting to monitor and manage file changes of specific apps, folders, or media file types. A manner of saving a file is reconstructed at a system level. For example, when monitoring a saving behavior, the electronic device 100 recognizes an identity of an application (including information such as a package name, a signature, and an application ID) that executes the saving behavior, to determine whether a specific application (an application that is selected by the user to be monitored and managed) saves the file; or the electronic device 100 recognizes an absolute path for saving the media file in the saving behavior, to determine whether the file is saved on a specific path (a path that is selected by the user to be monitored and managed). In this way, a change of the media file can be monitored in real time, a saved media file is screened, and only a needed media file is managed, to improve processing efficiency of the electronic device 100 and save resources.

In addition, when detecting that a media file is saved in an application for which the monitoring management capability is enabled, the electronic device 100 outputs a label editing window to prompt the user that information (for example, virtual file name information, category information, and label information) of the media file can be edited. The label editing window is a pop-up window suspended on an original interface of the application. The pop-up window cannot affect a life cycle status of the application below, and does not affect a function of the application below. This avoids a coupling relationship with a third-party application. The electronic device 100 provides a capability of performing file browsing and indexing based on file information edited by the user, including indexing by category index, indexing by label index, or querying and displaying by using a file virtual name.

It can be learned that, in embodiments of this application, generation of file information of a media file does not strongly depend on analysis of the media file, and a new media format that cannot be recognized may be managed by manually entering file information by the user. The user can edit file information based on understanding and a category preference of the user. In a subsequent browsing scenario, the user may browse and search for the media file based on edited file information.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing related hardware. The program may be stored in the computer-readable storage medium. When the program runs, the processes of the methods in embodiments are performed. The foregoing storage medium includes any medium that can store program code, such as a ROM, a random access memory RAM, a magnetic disk, or an optical disc.

## Claims

1. A media file management method, wherein the method comprises:
receiving, by an electronic device, a first user operation, wherein the first user operation is for saving a first media file;
displaying, by the electronic device, a first window for the first media file based on the first user operation, wherein the first window is for providing a manner of editing file information of the first media file;
obtaining, by the electronic device, the file information of the first media file; and
saving, by the electronic device, the first media file, the file information of the first media file, and a mapping relationship between the first media file and the file information of the first media file.

2. The method according to claim 1, wherein before the receiving, by an electronic device, a first user operation, the method further comprises:
determining, by the electronic device, a preset condition, wherein the preset condition is for screening a media file saved by the electronic device; and
the determining, by the electronic device, a preset condition comprises:
determining, by the electronic device, the preset condition based on an operation of a user; or
determining, by the electronic device, the preset condition based on a status of the electronic device.

3. The method according to claim 1 or 2, wherein the outputting, by the electronic device, a first window for the first media file based on the first user operation comprises:
obtaining, by the electronic device, related information of the first media file based on the first user operation; and
determining, by the electronic device, that the related information of the first media file meets the preset condition, and outputting the first window for the first media file.

4. The method according to claim 3, wherein the related information of the first media file comprises an application saving the first media file, and the determining, by the electronic device, that the related information of the first media file meets the preset condition comprises:
determining, by the electronic device, that the application saving the first media file is a preset application.

5. The method according to claim 3, wherein the related information of the first media file comprises a storage path of the first media file, and the determining, by the electronic device, that the related information of the first media file meets the preset condition comprises:
determining, by the electronic device, that the storage path of the first media file is a preset path.

6. The method according to claim 3, wherein the related information of the first media file comprises a media file type of the first media file, and the determining, by the electronic device, that the related information of the first media file meets the preset condition comprises:
determining, by the electronic device, that the media file type of the first media file is a preset file type.

7. The method according to claim 1, wherein the outputting, by the electronic device, a first window for the first media file based on the first user operation comprises:
outputting, by the electronic device, a first notification for the first media file based on the first user operation, wherein the first notification indicates a user to edit the file information of the first media file; and
receiving, by the electronic device, a second user operation for the first notification, and outputting the first window.

8. The method according to any one of claims 1 to 7, wherein the file information comprises one or more of the following: a virtual file name, one or more category names, and one or more label names.

9. The method according to claim 1, wherein after the saving, by the electronic device, the first media file, the file information of the first media file, and a mapping relationship between the first media file and the file information of the first media file, the method further comprises:
displaying, by the electronic device, the first media file based on the file information of the first media file.

10. The method according to claim 8, wherein the file information of the first media file comprises the one or more label names, and the method further comprises:
receiving, by the electronic device, a search instruction, wherein the search instruction comprises a first label name;
performing, by the electronic device, indexing based on the first label name, wherein the first label name is one of the one or more label names; and
displaying, by the electronic device, one or more media files that have a mapping relationship with the first label name, wherein the one or more media files comprise the first media file.

11. The method according to claim 1, wherein the outputting, by the electronic device, a first window for the first media file based on the first user operation comprises:
detecting, by the electronic device through a first interface, a saving operation on the first media file, wherein the first interface is configured to be invoked to save a media file; and
outputting, by the electronic device, the first window for the first media file.

12. The method according to claim 1, wherein the first user operation is further for saving a second media file, the first window is further for providing a manner of editing file information of the second media file, and the method further comprises:
obtaining, by the electronic device, the file information of the second media file; and
saving, by the electronic device, the second media file, the file information of the second media file, and a mapping relationship between the second media file and the file information of the second media file.

13. The method according to claim 1, wherein the first user operation is further for saving a second media file, and the method further comprises:
displaying, by the electronic device, a second window for the second media file, wherein the second window is for providing a manner of editing file information of the second media file;
obtaining, by the electronic device, the file information of the second media file; and
saving, by the electronic device, the second media file, the file information of the second media file, and a mapping relationship between the second media file and the file information of the second media file.

14. An electronic device, comprising one or more processors and one or more memories, wherein the one or more memories are respectively coupled to the one or more processors, the one or more memories are configured to store computer program code, the computer program code comprises computer instructions, and when the computer instructions are run on the processor, the electronic device is enabled to perform the method according to claims 1 to 13.

15. A computer-readable medium, configured to store one or more programs, wherein the one or more programs are configured to be executed by one or more processors, the one or more programs comprise instructions, and the instructions are for performing the method according to claims 1 to 13.
